# EUROPÄISCHE PATENTSCHRIFT

(11) **EP 4 232 758 B1**
(45) Veröffentlichungstag und Bekanntmachung des Hinweises auf die Patenterteilung: **18.03.2026**
(21) Anmeldenummer: 21793913.1
(22) Anmeldetag: 14.10.2021
(51) Int. Cl.: F24F 12/00, F24F 13/10, F24F 13/14

(54) **LÜFTUNGSVORRICHTUNG**
VENTILATION DEVICE
DISPOSITIF D'AÉRATION

(30) Priorität: 21.10.2020 EP 20203051
(43) Veröffentlichungstag der Anmeldung: 30.08.2023
(73) Patentinhaber: Viessmann Holding International GmbH, 35108 Allendorf (Eder) (DE)
(72) Erfinder: SCHRÖDER, Daniel, 59939 Olsberg (DE); EITZENHÖFER, Rico, 59969 Bromskirchen (DE)
(74) Vertreter: Clerc, Natalia
(86) Internationale Anmeldenummer: PCT/EP2021/078504
(87) Internationale Veröffentlichungsnummer: WO 2022/084156

(56) Entgegenhaltungen:
- EP-A1- 3 260 793
- WO-A1-97/06390
- DE-U1- 202012 010 671
- KR-B1- 101 263 656

## Beschreibung

### TECHNISCHES GEBIET

Die vorliegende Erfindung betrifft eine Lüftungsvorrichtung sowie ein Verfahren zum Betreiben einer Lüftungsvorrichtung eines Gebäudes.

### STAND DER TECHNIK

Gebäude werden vermehrt mit Lüftungsvorrichtungen mit Wärmerückgewinnung ausgestattet. Hierzu werden die von aussen in das Gebäude eingeführte Aussenluft und die vom Innern des Gebäudes nach aussen geführte Abluft durch einen gemeinsamen Wärmetauscher geführt. Wärme wird dadurch von einem Luftvolumenstrom auf den anderen übertragen.

Je nach Jahreszeit und herrschenden Temperaturen ist dieser Wärmeaustausch jedoch nicht oder zumindest nicht im gleichbleibenden Mass gewünscht. Deshalb sind Bypasskanäle vorgesehen, um einen der zwei Luftvolumenströme ohne Durchgang durch den Wärmetauscher nach innen bzw. nach aussen zu leiten. Der Durchgang durch den Wärmetauscher wird dabei durch eine Verschlussvorrichtung geschlossen. Diese Verschlussvorrichtung ist üblicherweise eine Klappe oder einer Rollblende.

DE 10 2013 216 306 A1 verwendet eine erste Klappe im Bypasskanal und eine zweite Klappe im Zuluftkanal. Die zwei Klappen sind getrennt voneinander betätigt.

Auch EP 0 044 560 B1 offenbart eine Lüftungsvorrichtung mit einem Wärmetauscher und einem Bypass, wobei die Vorrichtung einzeln betätigte Klappen aufweist.

EP 1 132 690 B1 zeigt zwei in Serie geschaltete Wärmetauscher, zwei Bypasskanäle und mehrere einzeln betätigte Klappen.

EP 2 498 014 B1 offenbart ein Wärmerückgewinnungsmodul mit einer Rollblende, die im aufgerollten Zustand den Bypass sperrt und den Wärmetauscher freigibt und im abgewickelten Zustand den Bypass freigibt, jedoch den Wärmetauscher sperrt.

EP 1 962 031 A2 zeigt ein Wärmerückgewinnungsmodul mit einer Klappe und einem Schieber, die eine bauliche Einheit bilden. Ihre Stellbewegungen sind zwangsgekoppelt, was durch Verbinden der senkrecht zueinander ausgerichteten Teile erreicht wird. Diese bauliche Einheit grenzt ohne weitere Leitungen oder Kanäle direkt an die Wärmetauscher-Bypass-Vorrichtung an.

Es sind ferner parallel geschaltete Wärmetauscher bekannt. US 2007/0158049 A1 offenbart beispielsweise eine derartige Lüftungseinheit mit mehreren nebeneinander angeordneten Wärmetauschern, die parallelgeschaltet sind und entsprechend parallel durchströmt werden. Ein gemeinsamer Bypasskanal ist neben den Wärmetauschern angeordnet.

DE 10 2011 114 885 A1 beschreibt eine Wärmetauscheranordnung mit einem gasförmigen und einem flüssigen Fluid. Die Anordnung weist zwei parallel angeströmte Wärmetauscher auf, die räumlich versetzt hintereinander angeordnet sind. Zwei Bypasskanäle ermöglichen die Ver- und Entsorgung der Wärmetauscher mit Luft. Jeder Bypasskanal verfügt über eine eigene, separat betätigte Verschlussklappe.

Die bekannten Vorrichtungen weisen nach wie vor einen relativ grossen Platzbedarf auf. Die Verwendung von mehreren Wärmetauschern weist den Nachteil auf, dass mehr Bypasskanäle und Klappen benötigt werden, was den Platzbedarf und die Herstellungskosten erhöht, insbesondere wegen der erhöhten Zahl der Motoren zur Betätigung der Klappen.

WO 97/06390 A1 offenbart ein Klimagerät mit zwei Wärmetauschern und einem zwischen den Wärmetauschern angeordnetes Schwenkelement, so dass verschiedene Strömungswege gewählt werden können.

KR 101 263 656 B1 zeigt eine Vorrichtung mit zwei Wärmetauschern, die wahlweise über zwei Aussenluftkanäle und zwei Abluftkanäle durchströmbar sind.

### DARSTELLUNG DER ERFINDUNG

Es ist deshalb eine Aufgabe der Erfindung, Lüftungsvorrichtungen, insbesondere einer Lüftungsanlage eines Gebäudes, möglichst kostengünstig und platzsparend auszubilden. Diese Aufgabe lösen eine Lüftungsvorrichtung mit den Merkmalen des Patentanspruchs 1 sowie ein Verfahren zum Betreiben einer Lüftungsvorrichtung gemäss Anspruch 5.

Die erfindungsgemässe Lüftungsvorrichtung für ein Gebäude weist auf:
- mindestens einen ersten und einen zweiten Wärmetauscher, die parallelbetrieben sind,
- einen Aussenluftkanal zur Zuführung von Aussenluft von aussen in die zwei Wärmetauscher,
- einen Zuluftkanal zur Abführung der Aussenluft, nun Zuluft genannt, aus den Wärmetauschern in einen Innenraum des Gebäudes,
- einen Abluftkanal zur Zuführung von Abluft aus dem Innenraum des Gebäudes in die zwei Wärmetauscher und
- einen Fortluftkanal zur Abführung der Abluft, nun Fortluft genannt, aus den Wärmetauschern nach aussen.

Ferner ist eine Verschlusseinheit vorhanden, die wahlweise
alle Kanäle freigibt
   oder
einen Luftvolumenstrom der Aussenluft durch einen der zwei Wärmetauscher ermöglicht und gleichzeitig einen Luftvolumenstrom der Abluft durch diesen einen der zwei Wärmetauscher verhindert sowie
gleichzeitig den Luftvolumenstrom der Abluft durch den anderen der zwei Wärmetauscher ermöglicht und den Luftvolumenstrom der Aussenluft durch diesen anderen der zwei Wärmetauscher verhindert.

Diese Lüftungsvorrichtung lässt sich äusserst kompakt und flach ausbilden. Die Lüftungsvorrichtung ermöglicht trotzdem einen grossen Volumenstrom.

Sie dient der Verwendung in einer Lüftungsanlage eines Gebäudes, insbesondere in einer zentralen Lüftungsanlage eines Gebäudes, vorzugsweise eines Wohn- oder Bürogebäudes.

Vorteilhaft ist insbesondere, dass die erfindungsgemässe Lüftungsvorrichtung keinen zusätzlichen Bypasskanal benötigt. Die zwei Wärmetauscher bilden selber Bypasskanäle aus, nämlich dann, wenn sie nur von einem der zwei Luftvolumenströme durchströmt werden und dadurch kein Wärmeaustausch mit dem anderen Luftvolumenstrom stattfinden kann.

Die in der erfindungsgemässen Lüftungsvorrichtung verwendete Verschlusseinheit kann aus zwei einzeln betätigten oder aus gemeinsam betätigten, insbesondere zwangsgekoppelten, Verschlusskörpern bestehen. Vorzugsweise wird die oben beschriebene erfindungsgemässe Verschlusseinheit verwendet.

In einer bevorzugten Ausführungsform der Lüftungsvorrichtung ist die Verschlusseinheit derart ausgebildet, dass sie die Luftvolumenströme wahlweise lediglich teilweise ermöglicht bzw. verhindert, indem sie die Kanäle bzw. Teilkanäle lediglich teilweise freigibt bzw. lediglich teilweise verschliesst.

In bevorzugten Ausführungsformen ermöglicht diese Anordnung somit, die Luftvolumenströme mit unterschiedlichen Teilen durch die zwei Wärmetauscher zu führen. Beispielsweise kann die Aussenluft zu 2/3 durch den ersten Wärmetauscher und zu 1/3 durch den zweiten Wärmetauscher geführt werden, wobei in diesem Fall die Abluft zu 1/3 durch den ersten Wärmetauscher und zu 2/3 durch den zweiten Wärmetauscher geleitet wird.

Vorzugsweise weist die Verschlusseinheit der erfindungsgemässen Lüftungsvorrichtung zwei gemeinsam mittels eines gemeinsamen Motors betätigbare Verschlusskörper auf. Die Verschlusskörper können Klappen wie in der erfindungsgemässen Vorrichtung sein. Sie können auch anders angeordnete Klappen oder andere Arten von Verschlusskörper sein.

Die Kanäle der erfindungsgemässen Lüftungsvorrichtung teilen sich in Teilkanäle auf. D.h., der Aussenluftkanal teilt sich in einen ersten Aussenluftteilkanal und einen zweiten Aussenluftteilkanal auf, wobei der erste Aussenluftteilkanal in den ersten Wärmetauscher führt und der zweite Aussenluftteilkanal in den zweiten Wärmetauscher führt. Der Zuluftkanal teilt sich in einen ersten Zuluftteilkanal und einen zweiten Zuluftteilkanal auf, wobei der erste Zuluftteilkanal aus dem ersten Wärmetauscher führt und der zweite Zuluftteilkanal aus dem zweiten Wärmetauscher führt. Der Abluftkanal teilt sich in einen ersten Abluftteilkanal und einen zweiten Abluftteilkanal auf, wobei der erste Abluftteilkanal in den ersten Wärmetauscher führt und der zweite Abluftteilkanal in den zweiten Wärmetauscher führt. Und der Fortluftkanal teilt sich in einen ersten Fortluftteilkanal und einen zweiten Fortluftteilkanal auf, wobei der erste Fortluftteilkanal aus dem ersten Wärmetauscher führt und der zweite Fortluftteilkanal aus dem zweiten Wärmetauscher führt.

Vorzugsweise verlaufen diejenigen Teilkanäle, die mittels der Verschlusseinheit freigegeben oder verschlossen werden, im Bereich der Verschlusseinheit in einem Winkel von 90° versetzt zueinander. Vorzugsweise sind auch die Klappen in einem Winkel von 90° versetzt zueinander angeordnet, wobei je eine Klappe in einem Teilkanal angeordnet ist.

Die Teilkanäle weisen je nach Ausführungsform alle dieselbe Querschnittsfläche und vorzugsweise sogar dieselbe Querschnittsform auf. In bevorzugten Ausführungsführungsformen weist ein erster Teilkanal zumindest im Bereich der Verschlusseinrichtung einen kleineren Querschnitt auf als ein dazugehöriger zweiter Teilkanal. Vorzugsweise ist derjenige Teilkanal grösser ausgebildet, der in Strömungsrichtung vor dem Wärmetauscher angeordnet ist, so dass der Teilkanal, der in Strömungsrichtung nach dem Wärmetauscher folgt, kleiner ist. Dadurch wird ein optimiertes Strömungsverhalten erzielt. Die Durchströmung ist verbessert und es wird eine Gleichverteilung vor dem Wärmetauscher und eine höhere Effizienz erhalten. In bevorzugten Ausführungsformen ist die Breite der Teilkanäle gleich grosse, die Höhe ist jedoch unterschiedlich.

Vorzugsweise ist mindestens ein Ventilator vorhanden. Vorzugsweise sind zwei Ventilatoren vorhanden; einer für die Aussenluft oder Zuluft und einer für die Abluft oder Fortluft.

In der erfindungsgemässen Lüftungsvorrichtung verschliesst die Verschlusseinheit gleichzeitig den ersten Zuluftteilkanal und den zweiten Abluftteilkanal bzw. gibt ihn frei oder die Verschlusseinheit verschliesst gleichzeitig den ersten Aussenluftteilkanal und den zweiten Fortluftteilkanal bzw. gibt ihn frei.

In einem erfindungsgemässen Verfahren zum Betreiben der genannten erfindungsgemässen Lüftungsvorrichtung
werden mindestens der erste und der zweite Wärmetauscher parallel betrieben,
führt der Aussenluftkanal die Aussenluft von aussen den zwei Wärmetauschern zu,
führt der Zuluftkanal die Aussenluft aus den Wärmetauschern in den Innenraum des Gebäudes ab,
führt der Abluftkanal die Abluft aus dem Innenraum des Gebäudes den zwei Wärmetauschern zu und
führt der Fortluftkanal die Abluft aus dem Wärmetauscher nach aussen ab.

Die Verschlusseinheit gibt wahlweise
alle Kanäle frei
   oder
ermöglicht einen Luftvolumenstrom der Aussenluft durch einen der zwei Wärmetauscher und verhindert gleichzeitig einen Luftvolumenstrom der Abluft durch diesen einen der zwei Wärmetauscher, wobei sie gleichzeitig den Luftvolumenstrom der Abluft durch den anderen der zwei Wärmetauscher ermöglicht und den Luftvolumenstrom der Aussenluft durch diesen anderen der zwei Wärmetauscher verhindert.

Dadurch erübrigt sich ein separater Bypasskanal. Eine einfache Verschlusseinheit, beispielsweise mit zwei gemeinsam betätigbaren, vorzugsweise zwangsgekoppelten, Klappen, genügt, um einen Wärmeaustausch zwischen den zwei Luftvolumenströmen zu verhindern.

Eine Verschlusseinheit einer Lüftungsvorrichtung weist mindestens zwei schwenkbar angeordnete Klappen zum Verschliessen je eines Lüftungskanals auf. Die zwei Klappen sind mittels einer gemeinsamen Welle, die eine gemeinsame Schwenkachse definiert, bewegbar. Die zwei Klappen sind somit zwangsgekoppelt und lassen sich mittels eines einzigen Motors gleichzeitig betätigen.

Diese Verschlusseinheit eignet sich für die unterschiedlichsten Anwendungen in Lüftungsvorrichtungen, in denen zwei Lüftungskanäle zeitgleich geschlossen bzw. geöffnet werden müssen. Dabei kann je nach Stellung der Klappen ein Lüftungskanal geöffnet und der andere geschlossen werden. Vorzugsweise werden jedoch beide Lüftungskanäle gleichzeitig geschlossen bzw. geöffnet.

Diese Verschlusseinheit dient beispielsweise als doppelte Bypassklappe mit einem einzigen Motor. Diese Verschlusseinheit dient jedoch vorzugsweise in einer Lüftungsvorrichtung, die ohne separatem Bypasskanal trotzdem eine Bypassfunktion aufweist. Dies wird später im Text genauer erläutert.

Diese Verschlusseinheit eignet sich insbesondere zur Anwendung in Lüftungsvorrichtungen mit einer Wärmerückgewinnung, insbesondere mittels Wärmetauschern. Vorzugsweise sind zwei oder mehr Wärmetauscher vorhanden, die vorzugsweise parallelbetrieben sind. Dies wird weiter unten im Text noch näher erläutert.

Vorzugsweise verläuft die Schwenkachse der Verschlusseinheit mittig durch die zwei Klappen.

Die Welle kann manuell betätigt werden. Vorzugsweise ist sie jedoch mittels eines Motors angetrieben. Vorzugsweise ist der Motor in Längsrichtung der Welle ober- oder unterhalb der zwei Klappen oder mittig zwischen den zwei Klappen angeordnet. Da lediglich ein einziger Motor verwendet werden muss, lassen sich die Herstellungskosten reduzieren. Die Anordnung ober- oder unterhalb der Klappen reduziert den Platzbedarf, insbesondere wenn ein möglichst flach ausgebildeter Motor verwendet wird. Diese Anordnung erlaubt zudem eine optimale Zugänglichkeit des Motors in einer Lüftungsvorrichtung, was die Wartung erheblich erleichtert.

Vorzugsweise sind die zwei Klappen in einem Winkel von 90° zueinander angeordnet. Wenn die zwei Lüftungskanäle parallel zueinander verlaufen, wird bei dieser 90°-Anordnung der Klappen ein erster Kanal von der ersten Klappe geschlossen, während der zweite Kanal von der zweiten Klappe geöffnet wird. Sind die Lüftungskanäle in einem Winkel von 90° zueinander angeordnet, so werden die Kanäle bei einer 90°-Anordnung der Klappen gemeinsam geschlossen bzw. freigegeben. Diese 90°-Anordnung der Klappen ermöglicht somit einen Einsatz in unterschiedlich angeordneten Kanälen. Dasselbe gilt, wenn die Klappen parallel zueinander angeordnet sind, wenn auch mit umgekehrter Wirkung in ihrem Schliessverhalten.

In einer bevorzugten Ausführungsform bildet jede der zwei Klappen eine Verschlussfläche aus, wobei die zwei Verschlussflächen die Schwenkachse der Welle beinhalten. Diese Anordnung erleichtert eine kostengünstige Fertigung und benötigt relativ wenig Platz.

Vorzugsweise weisen die zwei Klappen einen rechteckigen Querschnitt auf. Andere Formen, insbesondere runde, sind ebenfalls möglich. Die Form der Klappe ist vorzugsweise jeweils der Form der zu verschliessenden Kanäle angepasst.

In einer bevorzugten Ausführungsform weist die Verschlusseinheit ein erstes Gehäuse zur schwenkbaren Aufnahme einer ersten Klappe und ein zweites Gehäuse zur schwenkbaren Aufnahme einer zweiten Klappe auf. Die Welle weist einen oberen Abschnitt auf, der im ersten Gehäuse schwenkbar gelagert ist und der mit einem ersten Ende mit der ersten Klappe und mit einem zweiten Ende mit dem Motor verbunden ist. Die Welle weist zudem einen unteren Abschnitt auf, der mit einem ersten Ende mit der ersten Klappe und mit einem zweiten Ende mit der zweiten Klappe verbunden ist. Die zweite Klappe und/oder das zweite Ende des unteren Abschnitts der Welle ist im zweiten Gehäuse schwenkbar gelagert.

Dadurch lässt sich die Verschlusseinheit als relativ einfach aufgebautes und robustes Modul ausbilden, das sich als bauliche Einheit in eine Lüftungsvorrichtung einsetzen und bei Bedarf auch auf einfache Art und Weise im Rahmen von Servicearbeiten auswechseln lässt.

Diese Verschlusseinheit lässt sich in der oben beschriebenen erfindungsgemässen Lüftungsvorrichtung verwenden.

Weitere Ausführungsformen sind in den abhängigen Ansprüchen angegeben.

### KURZE BESCHREIBUNG DER ZEICHNUNGEN

Eine bevorzugte Ausführungsform der Erfindung wird im Folgenden anhand der Zeichnungen beschrieben, die lediglich zur Erläuterung dienen und nicht einschränkend auszulegen sind. In den Zeichnungen zeigen:
- Figur 1: eine schematische Darstellung einer erfindungsgemässen Lüftungsvorrichtung;
- Figur 2: eine perspektivische Darstellung einer Verschlusseinheit;
- Figur 3: eine erste Ansicht der Verschlusseinheit gemäss Figur 2;
- Figur 4: einen Querschnitt durch eine Verschlusseinheit gemäss Figur 3;
- Figur 5: eine zweite Ansicht der Verschlusseinheit gemäss Figur 2;
- Figur 6: einen Querschnitt durch eine Verschlusseinheit gemäss Figur 5;
- Figur 7: eine Explosionsdarstellung einer ersten Klappeneinrichtung der Verschlusseinheit gemäss Figur 2;
- Figur 8: eine perspektivische Ansicht des oberen Teils gemäss Figur 7;
- Figur 9: einen Längsschnitt durch den oberen Teil gemäss Figur 7;
- Figur 10: eine Explosionsdarstellung einer zweiten Klappeneinrichtung der Verschlusseinheit gemäss Figur 2;
- Figur 11: eine perspektivische Ansicht des unteren Teils gemäss Figur 10;
- Figur 12: einen Längsschnitt durch den oberen Teil gemäss Figur 10;
- Figur 13: eine erste perspektivische Ansicht eines Teils der erfindungsgemässen Lüftungsvorrichtung und
- Figur 14: eine zweite perspektivische Ansicht des Teils gemäss Figur 13.

### BESCHREIBUNG BEVORZUGTER AUSFÜHRUNGSFORMEN

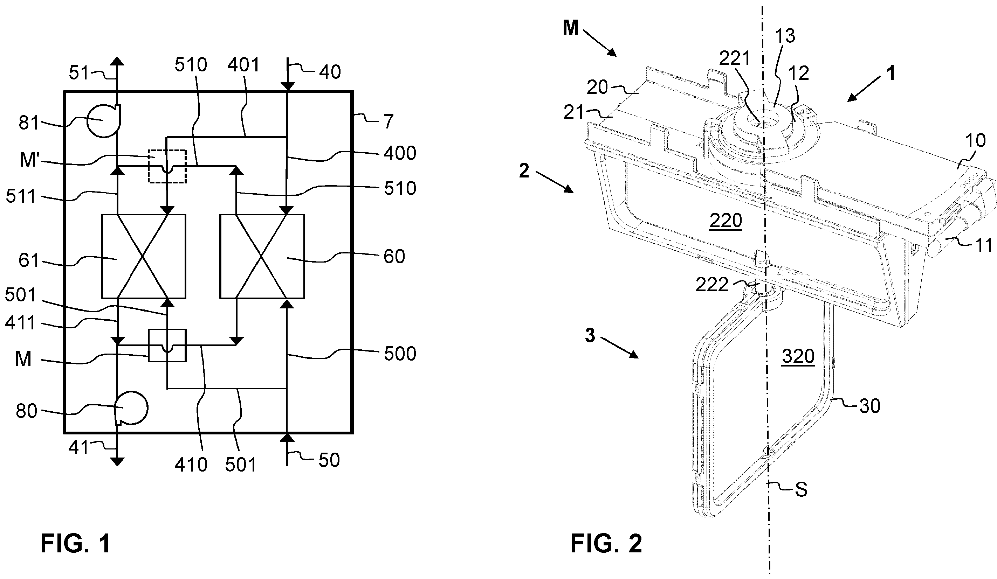

Figur 1 zeigt eine schematische Ansicht einer erfindungsgemässen Lüftungsvorrichtung zur Verwendung in einer Lüftungsanlage eines Gebäudes, insbesondere in einer zentralen Lüftungsanlage.

Die Lüftungsvorrichtung weist ein geschlossenes Gehäuse 7 auf, das möglichst flach ausgebildet ist. Im Gehäuse 7 sind zwei Wärmetauscher 60, 61 angeordnet. Sie sind vorzugsweise nebeneinander angeordnet und parallel betrieben. Die Wärmetauscher 60, 61 sind vorzugsweise Plattenwärmetauscher bekannter Art oder anders ausgebildete, möglichst flache Wärmetauscher bekannter Art.

In das Gehäuse 7 führt
- ein Aussenluftkanal 40 zur Zuführung von Aussenluft in die zwei Wärmetauscher 60, 61,
- ein Zuluftkanal 41 zur Abführung der die Wärmetauscher 60, 61 durchströmten Aussenluft in einen Innenraum des Gebäudes,
- ein Abluftkanal 50 zur Einführung von Abluft aus dem Innenraum des Gebäudes in die zwei Wärmetauscher 60, 61 und
- ein Fortluftkanal 51 zur Abführung der die zwei Wärmetauscher 60, 61 durchströmten Abluft nach aussen.

Die nach aussen abgeführte Abluft wird Fortluft genannt, die in den Innenraum geleitete Aussenluft wird Zuluft genannt. Durchströmen die zwei Luftvolumenströme der Aussenluft und der Abluft beide Wärmetauscher 60, 61 gleichzeitig, so findet in bekannter Weise ein Wärmeübergang statt, der zur Wärmerückgewinnung im Winter und gegebenenfalls auch zur Kühlung im Sommer dient. Je nach Jahreszeit oder Temperaturverhältnissen ist ein Wärmeaustausch nicht oder nur in einem verminderten Mass gewünscht.

Vorzugsweise ist mindestens ein, vorzugsweise sind mehrere Ventilatoren 80, 81 vorhanden. In diesem Beispiel befindet sich ein erster Ventilator 80 im Zuluftkanal 41 und ein zweiter Ventilator 81 im Fortluftkanal 51. In anderen Ausführungsformen ist der erste Ventilator 80 im Fortluftkanal 41 und der zweite Ventilator 81 im Zuluftkanal 51 angeordnet. Die Ventilatoren 80, 81 sind vorzugsweise mittels einer Regelung betrieben, vorzugsweise nach Massgabe eines Programms.

Damit die zwei Wärmetauscher 60, 61 im Parallelbetrieb durchströmt werden können, teilen sich die genannten Kanäle 40, 41, 50, 51 in entsprechende Teilkanäle auf. Somit ist ein erster und zweiter Aussenluftteilkanal 400, 401, ein erster und zweiter Zuluftteilkanal 410, 411, ein erster und zweiter Abluftteilkanal 500 501 und ein erster und zweiter Fortluftteilkanal 510, 511 vorhanden. Die ersten Teilkanäle 400, 410, 500, 510 sind mit dem ersten Wärmetauscher 60 und die zweiten Teilkanäle 401, 411, 501, 511 mit dem zweiten Wärmetauscher 61 verbunden.

Vorzugsweise ist eine Verschlusseinheit M vorhanden, die zwei der Teilkanäle gemeinsam verschliesst. Die Verschlusseinheit M weist zwei Verschlusskörper auf, wobei je einer der Verschlusskörper einen der zwei Teilkanäle verschliesst. Vorzugsweise sind die zwei Verschlusskörper Klappen. Vorzugsweise sind die Verschlusskörper motorbetrieben und über eine Steuerung betätigbar.

In einer einfachsten Ausführungsform sind die zwei Verschlusskörper räumlich getrennt voneinander angeordnet und sie werden mittels der Steuerung gleichzeitig oder nacheinander betätigt.

In bevorzugten Ausführungsformen sind die zwei Verschlusskörper jedoch benachbart zueinander angeordnet. Die zwei zu verschliessenden Teilkanäle verlaufen hierzu im Bereich der Verschlusseinheit M, auch Verschlussmodul oder Modul genannt, und somit im Bereich der Verschlusskörper benachbart zueinander, damit sie gleichzeitig gemeinsam geschlossen und wieder geöffnet werden können. Die zwei Teilkanäle können parallel zueinander verlaufen. Vorzugsweise kreuzen sie sich jedoch, wobei sie hierzu vorzugsweise übereinander verlaufen. In Figur 1 betrifft dies den ersten Zuluftteilkanal 410 und den zweiten Abluftteilkanal 501. Sind diese zwei Teilkanäle offen, so verlaufen sowohl der Aussenluftvolumenstrom wie auch der Abluftluftvolumenstrom durch beide Wärmetauscher 60, 61. Die zwei Wärmetauscher 60, 61 sind somit parallel von beiden Luftvolumenströme durchströmt.

Sind die zwei Teilkanäle 410 und 501 geschlossen, so kann der Aussenluftvolumenstrom nur noch durch den zweiten Wärmetauscher 61 und der Abluftvolumenstrom nur noch durch den ersten Wärmetauscher 60 strömen. Die Ströme sind somit "gebypasst", d.h. aneinander vorbeigeführt, ohne dass ein eigener Bypasskanal hierzu vorhanden sein muss. Es findet keine Wärmeübertragung zwischen den zwei Luftvolumenströme statt.

Alternativ lässt sich die Verschlusseinheit auch auf der anderen Seite der Wärmetauscher 60, 61 anordnen. Dies ist in der Figur 1 mit einem gestrichelten Rechteck dargestellt, da mit dem Bezugszeichen M' versehen ist. In dieser Variante sind der zweite Aussenluftteilkanal 401 und der erste Fortluftteilkanal 510 in einem Winkel von 90° zueinander und übereinander angeordnet, damit sie sich gemeinsam verschliessen lassen. Dadurch ist der Aussenluftvolumenstrom bei geschlossener Stellung der Verschlusseinheit M' ausschliesslich durch den ersten Wärmetauscher 60 geführt und der Abluftvolumenstrom ausschliesslich durch den zweiten Wärmetauscher 61. Auch in diesem Fall ist kein zusätzlicher Bypasskanal notwendig.

Die Verschlusseinheit M kann auch andere Kombinationen von ersten und zweiten Teilkanälen verschliessen, wie für den Fachmann einfach erkennbar ist.

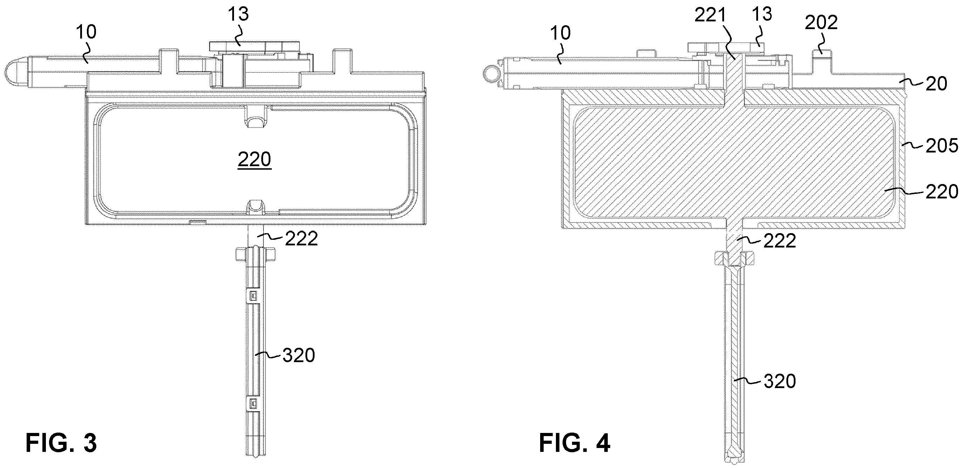

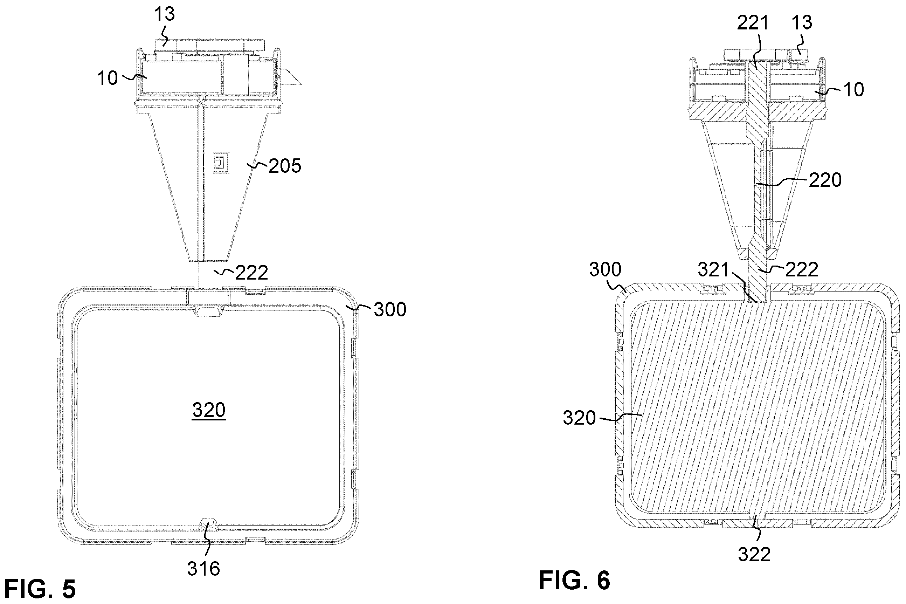

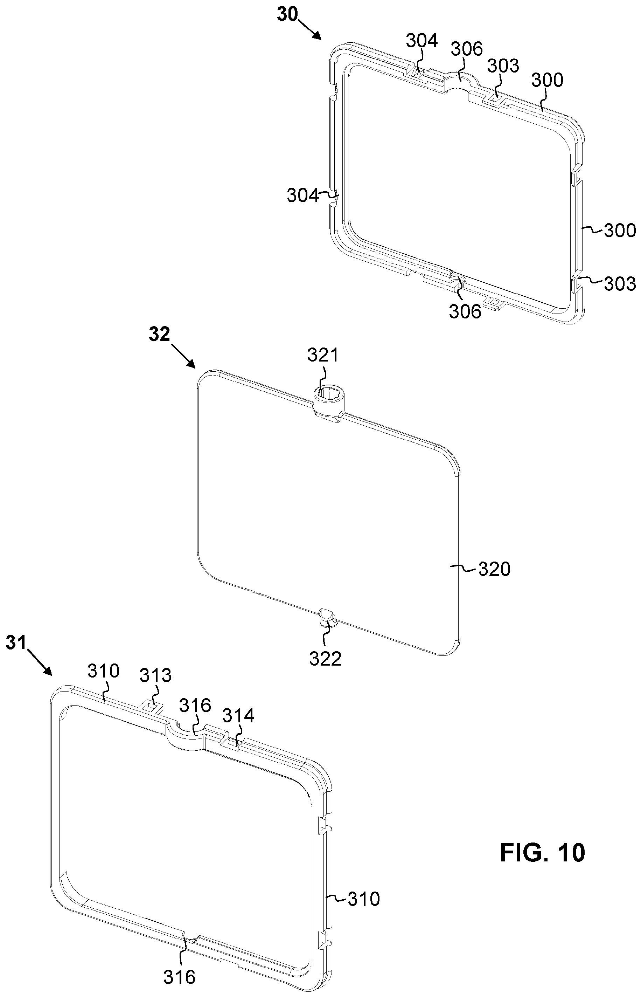

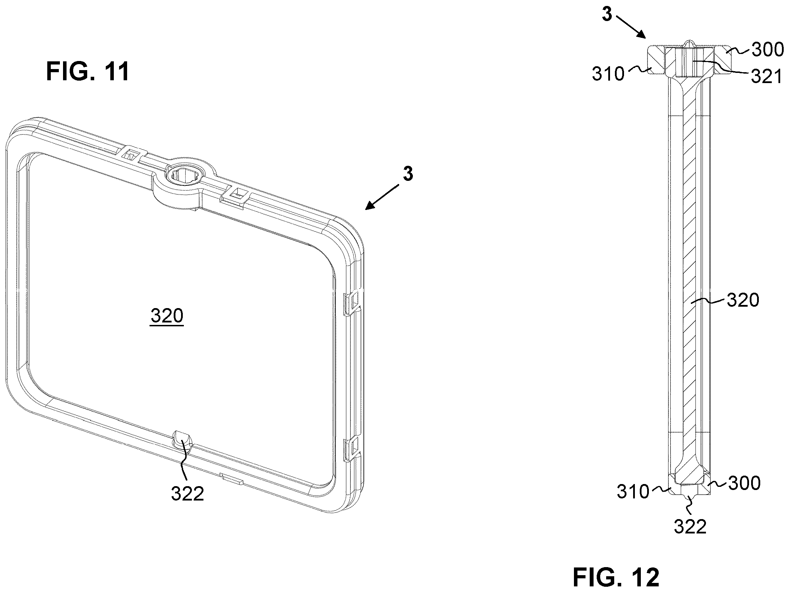

In den Figuren 2 bis 12 ist eine Verschlusseinheit M dargestellt, die vorzugsweise in der beschriebenen erfindungsgemässen Lüftungsvorrichtung einsetzbar ist. Diese Verschlusseinheit M lässt sich jedoch auch in andere Lüftungsvorrichtungen einsetzen, in denen sich zwei übereinander oder nebeneinander angeordnete Kanäle gemeinsam und zeitgleich geschlossen werden sollen.

Sind die Luftkanäle übereinander angeordnet, so kreuzen sich die Kanäle in einem Winkel von 90°. Sind sie nebeneinander angeordnet, so verlaufen sie parallel. In beiden Fällen verläuft eine Schwenkachse der Verschlusseinheit in einem Winkel von 90° in Bezug auf die Längsrichtungen der Luftkanäle. Bei übereinander angeordneten Luftkanälen verläuft die Schwenkachse vertikal, bei nebeneinander angeordneten Luftkanäle horizontal.

Wie in den Figuren 2 bis 6 gut erkennbar ist, umfasst die Verschlusseinheit eine erste Motoreinheit 1, eine erste Klappeneinrichtung 2 und eine zweite Klappeneinrichtung 3. Sie ist vorzugsweise als bauliche Einheit in Form eines Moduls ausgebildet, das als Ganzes in die Lüftungsvorrichtung montierbar ist. In anderen Ausführungsformen werden die Teile einzeln oder als Teilmodule montiert.

Die Motoreinheit 1 weist einen Motor 10 auf, der möglichst flach ausgebildet ist. Er ist auf einem Rahmen 20, 21 der ersten Klappeneinrichtung 2 fixiert gehalten. Ein Stromkabel 11 führt zu einer nicht dargestellten Steuerung der Lüftungsvorrichtung. Die Motoreinheit 1 weist ferner einen Drehteller 12 auf, der mittels des Motors 10 schwenkbar ist. Er ist auch von Hand betätigbar. In diesem Beispiel ist hierzu ein Bauteil 13 mit einem Magneten vorhanden
Die Vorrichtung weist eine mehrstückige Welle 221, 222, 223 auf, die eine Schwenkachse S definiert. Ein oberer Wellenabschnitt 221 ist im Drehteller 12 fixiert gehalten und mit diesem schwenk- oder drehbar. Der obere Wellenabschnitt 221 ist mit einer schwenk- oder drehbaren ersten Klappe 220 der ersten Klappeneinrichtung 2 verbunden. In diesem Beispiel ist sie einstückig an der ersten Klappe 220 angeformt. Ein unterer Wellenabschnitt 222 erstreckt sich von der ersten Klappe 220 entlang der Schwenkachse S nach unten. Auch dieser Abschnitt 222 ist vorzugsweise einstückig an der ersten Klappe 220 angeformt. Er ist mit einer zweiten Klappe 320 der zweiten Klappeneinrichtung 3 verbunden. Vorzugsweise ist sie lösbar mit dieser verbunden.

Wie in den Figuren 2 bis 6 gut erkennbar ist, verläuft die Schwenkachse S innerhalb der Flächen der zwei Klappen 220, 320. Vorzugsweise verläuft sie mittig. Die zwei Klappen 220, 320 sind in einem Winkel von 90° zueinander angeordnet. Sie sind je nach Form der sie aufnehmenden Teilkanäle ausgebildet. In diesem Beispiel weisen die Luftteilkanäle einen rechteckigen Querschnitt auf und die Klappen 220, 320 sind entsprechend rechteckförmig ausgebildet. Sie können gleich gross sein und dieselbe Form aufweisen. Vorzugsweise ist der Kanal in Strömungsrichtung hinter dem Wärmetauscher, hier der obere Kanal, jedoch aus strömungstechnischen Gründen schmaler ausgebildet, so dass die erste Klappe 220 schmaler und länger ausgebildet ist als die zweite Klappe 320.

Werden die Klappen 220, 320 mittels der motorbetriebenen Welle 221, 222 gedreht, so schwenken sie gemeinsam, wobei sie beide gleichzeitig ihre Teilkanäle freigeben oder verschliessen. Zwischenstellungen sind ebenfalls möglich, wobei sie ihre Teilkanäle jeweils im gleichen Verhältnis freigeben bzw. verschliessen.

Die zwei Klappen 220, 320 sind vorzugsweise in Rahmen 20, 21, 30, 31 gehalten. Dadurch lässt sich die Einheit M als Zwischenstück zwischen zwei Abschnitten der Luftteilkanäle anordnen und mit diesem verbinden. Dies erleichtert den Zusammenbau der Lüftungsvorrichtung, insbesondere, wenn diese selber ebenfalls als bauliche Einheit, d.h. als Modul, ausgebildet ist.

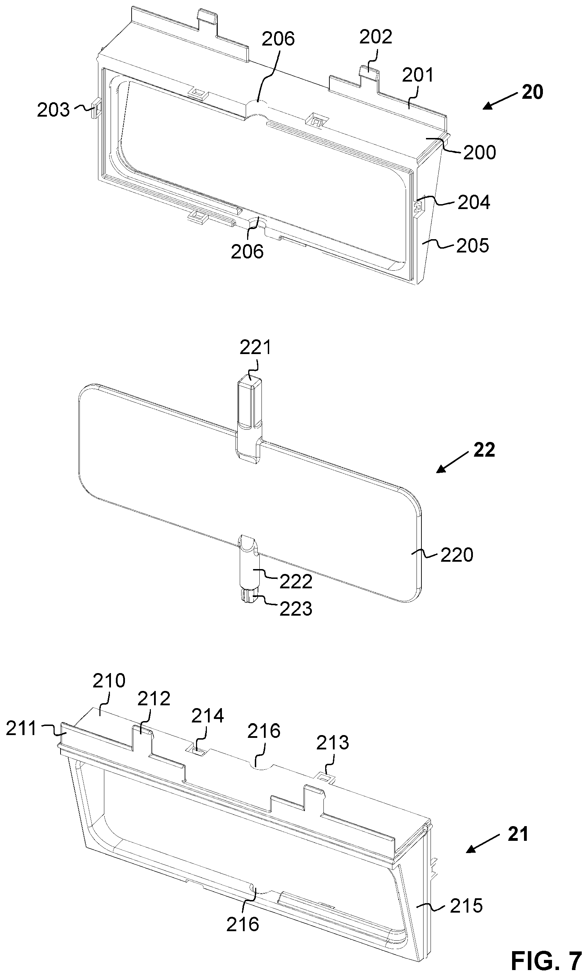

In den Figuren 7 bis 9 ist die erste Klappeneinheit 2 dargestellt. Sie umfasst drei Bauteile: ein rechtes Rahmenteil 20, ein linkes Rahmenteil 21 sowie ein darin schwenkbar angeordnetes erstes Klappenelement 22.

Die zwei Rahmenteile 20, 21 weisen je eine obere Fläche 200, 210 und nach oben ragende Seitenwände 201, 211 mit nach innen gerichteten Rückhaltenasen 202, 212 zur Aufnahme und Fixierung des Motors 10 auf.

Die zwei Rahmenteile 20, 21 weisen oben und unten jeweils eine halbkreisförmige Ausnehmung 206, 216 auf, die zum zusammengesetzten Zustand der ersten Klappeneinheit 2 kreisförmige Öffnungen bilden und die zur Aufnahme der Wellenabschnitte 221, 222 und eines zweiten Endteils 322 dienen.

Die zwei Rahmenteile 20, 21 lassen sich vorzugsweise mittels Schnappverbindungen zu einem gemeinsamen Rahmen zusammenfügen und fixieren. Hierzu sind beispielsweise Einrastbügel 203, 213 und zugehörige Einrasthaken 204, 214 vorhanden. Die Seitenflächen 205, 215 weisen vorzugsweise einen dreieckigen Querschnitt auf, wobei sie sich nach unten, d.h. vom Motor 10 weg, verjüngen.

Das erste Klappenelement 22 ist vorzugsweise einstückig ausgebildet. Es weist die plattenförmige erste Klappe 220 auf, an welcher, mittig am oberen Ende, der obere Wellenabschnitt 221 und, mittig am unteren Ende, der untere Wellenabschnitt 222 angeformt ist. Der untere Wellenabschnitt 222 endet in einem als Mehrkant ausgebildeten ersten Endteil 223.

Die erste Klappe 220 und/oder der erste Rahmen 20, 21 sind vorzugsweise so ausgebildet, dass sie möglichst dicht schliesst. Sie ist dreh- oder schwenkbar im Rahmen 20, 21, gehalten.

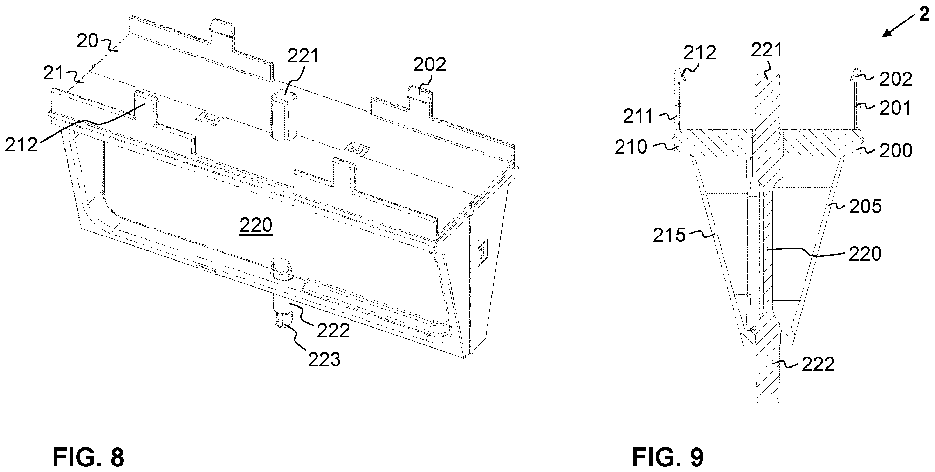

Wie in den Figuren 8 und 9 gut erkennbar ist, durchsetzt der obere Wellenabschnitt 221 den oberen Bereich des Rahmens 20, 21 und der untere Wellenabschnitt 223 den unteren Bereich. Beide stehen dem Rahmen 20, 21 vor, damit sie mit dem Motor 10 bzw. der Drehscheibe 12 und mit der zweiten Klappeneinheit 3 verbunden werden können.

Die zweite Klappeneinheit 3 weist ebenfalls ein rechtes und ein linkes Rahmenteil 30, 31 auf mit einem dazwischen gehaltenen zweiten Klappenelement 32. Die zwei Rahmenteile 30, 31 weisen je einen rechteckförmigen Rahmen 300, 310 auf, deren Wandungen relativ schmal ausgebildet sind. Diese zwei Rahmen 300, 310 lassen sich vorzugsweise mittels Schnappverbindungen verbindbar und fixierbar. Es sind entsprechende Einrastbügel 303, 313 und Einrasthaken 304 314 vorhanden. Die Rahmen 300, 310 weisen oben mittig angeordnete halbkreisförmige Ausnehmungen 306, 316 auf, die im zusammengesteckten Zustand des Rahmens 30, 31 eine gemeinsame kreisförmige Durchführungsöffnung zur Aufnahme eines Wellenlagers 321 bilden. Die Rahmen 300, 310 weisen zudem unten mittig angeordnete halbkreisförmige Ausnehmungen 306, 316 auf, die im zusammengesteckten Zustand des Rahmens 30, 31 eine gemeinsame kreisförmige Aufnahmeöffnung zur Aufnahme eines zweiten Endteils 322 bilden.

Das zweite Klappenelement 32 ist vorzugsweise ebenfalls einstückig ausgebildet. Es weist die plattenförmige zweite Klappe 320 auf, an welcher mittig am oberen Ende das Wellenlager 321 in Form eines Innenmehrkants ausgebildet ist. Das Wellenlager 321 dient zur drehfesten Verbindung mit dem ersten Endteil 223 des unteren Wellenabschnitts 222. Mittig am unteren Ende der zweiten Klappe 320 ist das zweite Endteil 322 angeformt ist, da zur dreh- oder schenkbare Lagerung der zweiten Klappe 320 in der unteren Aufnahmeöffnung 316 des zweiten Rahmens 30, 31 dient.

Die zweite Klappe 320 und/oder der zweite Rahmen 30, 31 sind ebenfalls vorzugsweise so ausgebildet, dass sie möglichst dicht schliesst. Sie ist dreh- oder schwenkbar im zweiten Rahmen 30, 31, gehalten.

Die einzelnen Elemente der Verschlusseinheit M sind vorzugsweise aus Metall oder aus Kunststoff gefertigt. Sie lassen sich kostengünstig fertigen und einfach zusammensetzen. Zudem ist der Einbau in die Lüftungsvorrichtung dank der zwei Rahmen vereinfacht.

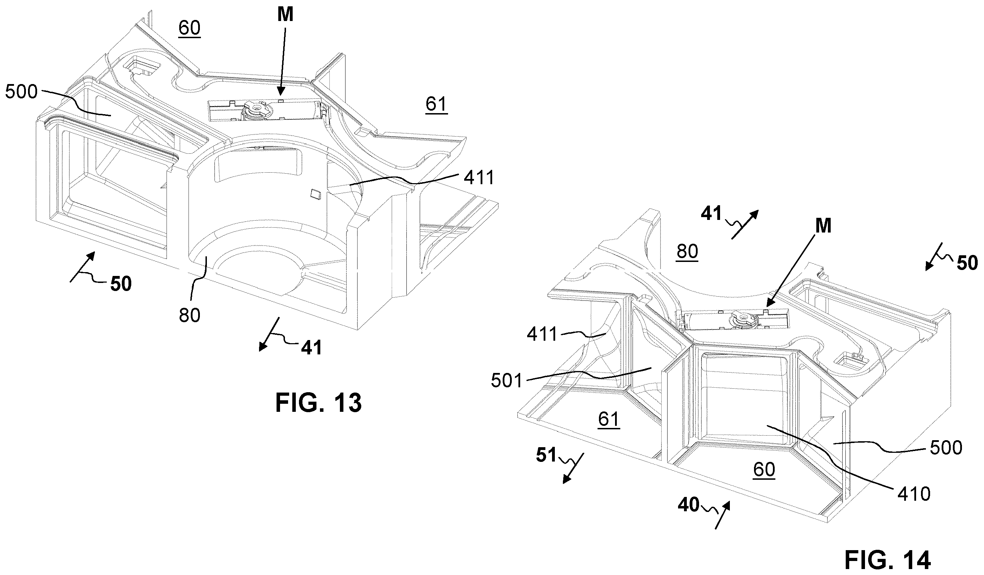

Die Figuren 13 und 14 zeigen einen Ausschnitt einer Lüftungsvorrichtung mit integrierter Verschlusseinheit. Die Teilkanäle sind mit denselben Bezugszeichen wie im oben beschriebenen Beispiel versehen.

In den in diesem Text beschriebenen Beispielen kann der Zuluftkanal auch der Fortluftkanal und der Aussenluftkanal auch der Abluftkanal sein. Der Text ist entsprechend zu verstehen. Dasselbe gilt für die Teilkanäle.

Die Verschlusseinheit, bei welcher zwei Klappen gemeinsam betätigt werden, ermöglicht die Verwendung von zwei parallelbetriebenen Wärmetauschern ohne weiteren Bypasskanal.

### BEZUGSZEICHENLISTE

| | | | |
|---|---|---|---|
| 1 | Motoreinheit | 304 | Einrasthaken |
| 10 | Motor | 306 | Ausnehmung |
| 11 | Kabel | 31 | linkes Rahmenteil |
| 12 | Drehteller | 310 | linker Rahmen |
| 13 | Bauteil mit Magnet | 313 | Einrastbügel |
| | | 314 | Einrasthaken |
| 2 | erste Klappeneinrichtung | 316 | Ausnehmung |
| 20 | rechtes Rahmenteil | 32 | zweites Klappenelement |
| 200 | rechte obere Fläche | 320 | zweite Klappe |
| 201 | Seitenwand | 321 | Wellenlager |
| 202 | Rückhaltenase | 322 | zweites Endteil |
| 203 | Einrastbügel | | |
| 204 | Einrasthaken | 40 | Aussenluftkanal |
| 205 | Seitenfläche | 400 | erster Aussenluftteilkanal |
| 206 | Ausnehmung | 401 | zweiter Aussenluftteilkanal |
| 21 | linkes Rahmenteil | 41 | Zuluftkanal |
| 210 | linke obere Fläche | 410 | erster Zuluftteilkanal |
| 211 | Seitenwand | 411 | zweiter Zuluftteilkanal |
| 212 | Rückhaltenase | 50 | Abluftkanal |
| 213 | Einrastbügel | 500 | erster Abluftteilkanal |
| 214 | Einrasthaken | 501 | zweiter Abluftteilkanal |
| 215 | Seitenfläche | 51 | Fortluftkanal |
| 216 | Ausnehmung | 510 | erster Fortluftteilkanal |
| 22 | erstes Klappenelement | 511 | zweiter Fortluftteilkanal |
| 220 | erste Klappe | 60 | erster Wärmetauscher |
| 221 | oberer Wellenabschnitt | 61 | zweiter Wärmetauscher |
| 222 | unterer Wellenabschnitt | 7 | Gehäuse |
| 223 | erstes Endteil | 80 | erster Ventilator |
| | | 81 | zweiter Ventilator |
| 3 | zweite Klappeneinrichtung | | |
| 30 | rechtes Rahmenteil | M | Verschlusseinheit |
| 300 | rechter Rahmen | M' | Verschlusseinheit |
| 303 | Einrastbügel | S | Schwenkachse |

## Patentansprüche

1. Lüftungsvorrichtung für ein Gebäude, wobei die Lüftungsvorrichtung aufweist:
- mindestens einen ersten und einen zweiten Wärmetauscher (60, 61), die parallelbetrieben sind,
- einen Aussenluftkanal (40) zur Zuführung von Aussenluft von aussen in die zwei Wärmetauscher,
- einen Zuluftkanal (41) zur Abführung der Aussenluft aus den Wärmetauschern in einen Innenraum des Gebäudes,
- einen Abluftkanal (50) zur Zuführung von Abluft aus dem Innenraum des Gebäudes in die zwei Wärmetauscher,
- einen Fortluftkanal (51) zur Abführung der Abluft aus den zwei Wärmetauschern nach aussen,
wobei eine Verschlusseinheit (M) vorhanden ist, die derart ausgebildet ist, dass sie wahlweise
a) alle Kanäle (40, 41, 50, 51) freigibt
oder
b) einen Luftvolumenstrom der Aussenluft durch einen der zwei Wärmetauscher ermöglicht und gleichzeitig einen Luftvolumenstrom der Abluft durch diesen einen der zwei Wärmetauscher verhindert sowie gleichzeitig den Luftvolumenstrom der Abluft durch den anderen der zwei Wärmetauscher ermöglicht und den Luftvolumenstrom der Aussenluft durch diesen anderen der zwei Wärmetauscher verhindert,
**dadurch gekennzeichnet,**
**dass** sich der Aussenluftkanal in einen ersten Aussenluftteilkanal (400) und einen zweiten Aussenluftkanal (401) aufteilt, wobei der erste Aussenluftteilkanal in den ersten Wärmetauscher führt und der zweite Aussenluftteilkanal in den zweiten Wärmetauscher führt,
**dass** sich der Zuluftkanal in einen ersten Zuluftteilkanal (410) und einen zweiten Zuluftteilkanal (411) aufteilt, wobei der erste Zuluftteilkanal aus dem ersten Wärmetauscher führt und der zweite Zuluftteilkanal aus dem zweiten Wärmetauscher führt,
**dass** sich der Abluftkanal in einen ersten Abluftteilkanal (500) und einen zweiten Abluftteilkanal (501) aufteilt, wobei der erste Abluftteilkanal in den ersten Wärmetauscher führt und der zweite Abluftteilkanal. in den zweiten Wärmetauscher führt,
**dass** sich der Fortluftkanal in einen ersten Fortluftteilkanal (510) und einen zweiten Fortluftteilkanal (511) aufteilt, wobei der erste Fortluftteilkanal aus dem ersten Wärmetauscher führt und der zweite Fortluftteilkanal aus dem zweiten Wärmetauscher führt, und
i. **dass** die Verschlusseinheit derart ausgebildet ist, dass sie gleichzeitig den ersten Zuluftteilkanal und den zweiten Abluftteilkanal verschliesst bzw. freigibt
oder
ii. **dass** die Verschlusseinheit gleichzeitig den zweiten Aussenluftteilkanal und den ersten Fortluftteilkanal verschliesst bzw. freigibt.

2. Lüftungsvorrichtung nach Anspruch 1, wobei die Verschlusseinheit derart ausgebildet ist, dass sie die Luftvolumenströme wahlweise lediglich teilweise ermöglicht bzw. verhindert, indem sie die Kanäle bzw. Teilkanäle lediglich teilweise freigibt bzw. lediglich teilweise verschliesst.

3. Lüftungsvorrichtung nach einem der Ansprüche 1 oder 2, wobei die Verschlusseinheit zwei gemeinsam mittels eines gemeinsamen Motors (10) betätigbare Verschlusskörper (220, 320) aufweist.

4. Lüftungsvorrichtung nach einem der Ansprüche 1 bis 3, wobei diejenigen Teilkanäle, die mittels der Verschlusseinheit freigegeben oder verschlossen werden, im Bereich der Verschlusseinheit in einem Winkel von 90° versetzt oder in einem Winkel von 0° zueinander verlaufen.

5. Verfahren zum Betreiben einer Lüftungsvorrichtung für ein Gebäude nach einem der Ansprüche 1 bis 4,
wobei der erste und der zweite Wärmetauscher parallel betrieben werden,
wobei der erste Aussenluftteilkanal die Aussenluft von aussen dem ersten Wärmetauscher zuführt und der zweite Aussenluftteilkanal die Aussenluft von aussen dem zweiten Wärmetauscher zuführt,
wobei der erste Zuluftteilkanal die Aussenluft aus dem ersten Wärmetauscher in einen Innenraum des Gebäudes abführt und wobei der zweite Zuluftteilkanal die Aussenluft aus dem zweiten Wärmetauscher in den Innenraum des Gebäudes abführt,
wobei der erste Abluftteilkanal die Abluft aus dem Innenraum des Gebäudes dem ersten Wärmetauscher zuführt und wobei der zweite Abluftteilkanal die Abluft aus dem Innenraum des Gebäudes dem zweiten Wärmetauscher zuführt,
wobei der erste Fortluftteilkanal die Abluft aus dem ersten Wärmetauscher nach aussen abführt und wobei der zweite Fortluftteilkanal die Abluft aus dem zweiten Wärmetauscher nach aussen abführt
wobei die Verschlusseinheit wahlweise
a) alle Kanäle freigibt
oder
b) einen Luftvolumenstrom der Aussenluft durch einen der zwei Wärmetauscher ermöglicht und gleichzeitig einen Luftvolumenstrom der Abluft durch diesen einen der zwei Wärmetauscher verhindert sowie gleichzeitig den Luftvolumenstrom der Abluft durch den anderen der zwei Wärmetauscher ermöglicht und den Luftvolumenstrom der Aussenluft durch diesen anderen der zwei Wärmetauscher verhindert
und wobei
i. die Verschlusseinheit gleichzeitig den ersten Zuluftteilkanal und den zweiten Abluftteilkanal verschliesst bzw. freigibt
oder
ii. die Verschlusseinheit gleichzeitig den zweiten Aussenluftteilkanal und den ersten Fortluftteilkanal verschliesst bzw. freigibt.

## Claims

1. Ventilation apparatus for a building, wherein the ventilation apparatus has:
- at least one first and one second heat exchanger (60, 61), which are operated in parallel,
- an outside-air channel (40) for feeding outside air from the outside into the two heat exchangers,
- a supply-air channel (41) for discharging the outside air from the heat exchangers into an interior space of the building,
- an exhaust-air channel (50) for feeding exhaust air from the interior space of the building into the two heat exchangers,
- an expulsion-air channel (51) for discharging the exhaust air from the two heat exchangers to the outside, wherein provision is made of a closure unit (M) which is designed such that it selectively
a) opens up all the channels (40, 41, 50, 51)
or
allows an air volume stream of the outside air through one of the two heat exchangers and simultaneously prevents an air volume stream of the exhaust air through this one of the two heat exchangers and
b) simultaneously allows the air volume stream of the exhaust air through the other one of the two heat exchangers and prevents the air volume stream of the outside air through this other one of the two heat exchangers
**characterized**
**in that** the outside-air channel is divided into a first outside-air sub-channel (400) and a second outside-air sub-channel (401), wherein the first outside-air sub-channel leads into the first heat exchanger and the second outside-air sub-channel leads into the second heat exchanger,
**in that** the supply-air channel is divided into a first supply-air sub-channel (410) and a second supply-air sub-channel (411), wherein the first supply-air sub-channel leads out of the first heat exchanger and the second supply-air sub-channel leads out of the second heat exchanger,
**in that** the exhaust-air channel is divided into a first exhaust-air sub-channel (500) and a second exhaust-air sub-channel (501), wherein the first exhaust-air sub-channel leads into the first heat exchanger and the second exhaust-air sub-channel leads into the second heat exchanger, and
**in that** the expulsion-air channel is divided into a first expulsion-air sub-channel (510) and a second expulsion-air sub-channel (511), wherein the first expulsion-air sub-channel leads out of the first heat exchanger and the second expulsion-air sub-channel leads out of the second heat exchanger, and
i. **in that** the closure unit is designed such that it simultaneously closes off or opens up the first supply-air sub-channel and the second exhaust-air sub-channel,
or
ii. **in that** the closure unit simultaneously closes off or opens up the second outside-air sub-channel and the first expulsion-air sub-channel.

2. Ventilation apparatus as claimed in claim 1, wherein the closure unit is designed in such a way that it selectively only partially allows or prevents the air volume streams in that it only partially opens up or only partially closes off the channels or sub-channels.

3. Ventilation apparatus as claimed in either of claims 1 and 2, wherein the closure unit has two closure bodies (220, 320) which are actuatable together by means of a common motor (10).

4. Ventilation apparatus as claimed in either of claims 1 to 3, wherein those sub-channels which are opened up or closed off by means of the closure unit extend offset at an angle of 90°, or at an angle of 0°, with respect to one another in the region of the closure unit.

5. Method for operating a ventilation apparatus for a building as claimed in one of claims 1 to 4,
- wherein the first and second heat exchangers are operated in parallel,
- wherein the first outside-air sub-channel feeds the outside air from the outside to the first heat exchanger, and wherein the second outside-air sub-channel feeds the outside air from the outside to the second heat exchanger two heat exchangers,
- wherein the first supply-air sub-channel discharges the outside air from the first heat exchanger into an interior space of the building, and wherein the second supply-air sub-channel discharges the outside air from the second heat exchanger into an interior space of the building
- wherein the first exhaust-air sub-channel feeds the exhaust air from the interior space of the building to the first heat exchanger, and wherein the second exhaust-air sub-channel feeds the exhaust air from the interior space of the building to the second heat exchanger
- wherein the first expulsion-air sub-channel discharges the exhaust air from the first heat exchanger to the outside, and wherein the second expulsion-air sub-channel discharges the exhaust air from the second heat exchanger to the outside, and
wherein the closure unit selectively
- a) opens up all the channels or
allows an air volume stream of the outside air through one of the two heat exchangers and simultaneously prevents an air volume stream of the exhaust air through this one of the two heat exchangers and
b) simultaneously allows the air volume stream of the exhaust air through the other one of the two heat exchangers and prevents the air volume stream of the outside air through this other one of the two heat exchangers,
and
i. wherein the closure unit simultaneously closes off or opens up the first supply-air sub-channel and the second exhaust-air sub-channel,
or
ii. wherein the closure unit simultaneously closes off or opens up the second outside-air sub-channel and the first expulsion-air sub-channel.

## Revendications

1. Dispositif de ventilation pour un bâtiment, le dispositif de ventilation comportant :
- au moins un premier et un deuxième échangeur de chaleur (60, 61) qui fonctionnent en parallèle,
- un conduit d'air extérieur (40) destiné à amener de l'air extérieur depuis l'extérieur dans les deux échangeurs de chaleur,
- un conduit d'amenée d'air (41) destiné à évacuer l'air extérieur des échangeurs de chaleur dans un espace intérieur du bâtiment,
- un conduit d'évacuation d'air (50) destiné à amener l'air sortant de l'espace intérieur du bâtiment dans les deux échangeurs de chaleur,
- un conduit d'échappement d'air (51) destiné à évacuer l'air sortant des deux échangeurs de chaleur vers l'extérieur,
une unité de fermeture (M) présente étant formée de manière au choix
a) à libérer tous les conduits (40, 41, 50, 51)
ou
b) à permettre un débit volumique d'air de l'air extérieur à travers l'un des deux échangeurs de chaleur et à empêcher simultanément un débit volumique d'air de l'air sortant à travers ledit un des deux échangeurs de chaleur et à permettre simultanément le débit volumique d'air de l'air sortant à travers l'autre des deux échangeurs de chaleur et à empêcher le débit volumique d'air de l'air extérieur à travers ledit autre des deux échangeurs de chaleur,
**caractérisé en ce**
**que** le conduit d'air extérieur est divisé en un premier conduit partiel d'air extérieur (400) et en un deuxième conduit partiel d'air extérieur (401), le premier conduit partiel d'air extérieur menant dans le premier échangeur de chaleur et le deuxième conduit partiel d'air extérieur menant dans le deuxième échangeur de chaleur,
**que** le conduit d'amenée d'air est divisé en un premier conduit partiel d'amenée d'air (410) et en un deuxième conduit partiel d'amenée d'air (411), le premier conduit partiel d'amenée d'air menant hors du premier échangeur de chaleur et le deuxième conduit partiel d'amenée d'air menant hors du deuxième échangeur de chaleur,
**que** le conduit d'évacuation d'air est divisé en un premier conduit partiel d'évacuation d'air (500) et en un deuxième conduit partiel d'évacuation d'air (501), le premier conduit partiel d'évacuation d'air menant dans le premier échangeur de chaleur et le deuxième conduit partiel d'évacuation d'air menant dans le deuxième échangeur de chaleur,
**que** le conduit d'échappement d'air est divisé en un premier conduit partiel d'échappement d'air (510) et en un deuxième conduit partiel d'échappement d'air (511), le premier conduit partiel d'échappement d'air menant hors du premier échangeur de chaleur et le deuxième conduit partiel d'échappement d'air menant hors du deuxième échangeur de chaleur, et
i. **que** l'unité de fermeture est formée de telle manière qu'elle ferme ou libère simultanément le premier conduit partiel d'amenée d'air et le deuxième conduit partiel d'évacuation d'air
ou
ii. **que** l'unité de fermeture ferme ou libère simultanément le deuxième conduit partiel d'air extérieur et le premier conduit partiel d'échappement d'air.

2. Dispositif de ventilation selon la revendication 1, l'unité de fermeture étant formée de telle manière qu'elle permet ou empêche seulement en partie au choix les débits volumiques d'air en libérant seulement en partie ou en fermant seulement en partie les conduits ou les conduits partiels.

3. Dispositif de ventilation selon l'une des revendications 1 ou 2, l'unité de fermeture comportant deux corps de fermeture (220, 320) pouvant être actionnés conjointement au moyen d'un moteur commun (10).

4. Dispositif de ventilation selon l'une des revendications 1 à 3, lesdits conduits partiels, qui sont libérés ou fermés au moyen de l'unité de fermeture, s'étendant les uns par rapport aux autres de manière décalée selon un angle de 90° ou selon un angle de 0° dans la zone de l'unité de fermeture.

5. Procédé pour faire fonctionner un dispositif de ventilation pour un bâtiment selon l'une des revendications 1 à 4,
le premier et le deuxième échangeur de chaleur fonctionnant en parallèle,
le premier conduit partiel d'air extérieur amenant l'air extérieur depuis l'extérieur au premier échangeur de chaleur et le deuxième conduit partiel d'air extérieur amenant l'air extérieur depuis l'extérieur au deuxième échangeur de chaleur,
le premier conduit partiel d'amenée d'air évacuant l'air extérieur du premier échangeur de chaleur dans un espace intérieur du bâtiment et le deuxième conduit partiel d'amenée d'air évacuant l'air extérieur du deuxième échangeur de chaleur dans l'espace intérieur du bâtiment,
le premier conduit partiel d'évacuation d'air amenant l'air sortant hors de l'espace intérieur du bâtiment au premier échangeur de chaleur et le deuxième conduit partiel d'évacuation d'air amenant l'air sortant hors de l'espace intérieur du bâtiment au deuxième échangeur de chaleur,
le premier conduit partiel d'échappement d'air évacuant l'air sortant hors du premier échangeur de chaleur vers l'extérieur et le deuxième conduit partiel d'échappement d'air évacuant l'air sortant hors du deuxième échangeur de chaleur vers l'extérieur
l'unité de fermeture, au choix,
a) libérant tous les conduits
ou
b) permettant un débit volumique d'air de l'air extérieur à travers l'un des deux échangeurs de chaleur et empêchant simultanément un débit volumique d'air de l'air sortant à travers ledit un des deux échangeurs de chaleur et permettant simultanément le débit volumique d'air de l'air sortant à travers l'autre des deux échangeurs de chaleur et empêchant le débit volumique d'air de l'air extérieur à travers ledit autre des deux échangeurs de chaleur
et
i. l'unité de fermeture fermant ou libérant simultanément le premier conduit partiel d'amenée d'air et le deuxième conduit partiel d'évacuation d'air
ou
ii. l'unité de fermeture fermant ou libérant simultanément le deuxième conduit partiel d'air extérieur et le premier conduit partiel d'échappement d'air.
